# EUROPEAN PATENT APPLICATION

(11) **EP 1 632 872 A1**
(43) Date of publication of application: **08.03.2006**
(21) Application number: 04255236.4
(22) Date of filing: 31.08.2004
(51) Int. Cl.: G06F 17/30, G06F 3/023

(54) **System and method for managing databases in a handheld electronic device**

(71) Applicant: 2012244 Ontario Inc., Waterloo, Ontario N2L 3W8 (CA)
(72) Inventor: Fux, Vadim, Ontario N2K 3P5 (CA); Wisebourt, Shaul, Ontario N2L 2W6 (CA)
(74) Representative: Hibbert, Juliet Jane Grace

(57) **Abstract**

Multiple applications in a handheld electronic device share a plurality of databases. The shared databases have a data adapter that includes an interface module that communicates with the various applications, logic that formulates a query containing the arguments in a data request from an application and a reader that retrieves the requested data from the associated database. The logic then generates a response for return to the application, which can include processing of the read data such as by adding frequency of use data for text input applications, and/or sorting of the data.

## Description

### BACKGROUND OF THE INVENTION

### Field of the Invention

This invention relates generally to handheld electronic devices, and more particularly, to a method and system for sharing databases among multiple applications run by the handheld electronic device thereby reducing the burden on memory resources.

### Background Information

Handheld electronic devices are becoming ubiquitous. Examples include, for instance, personal data assistants (PDAs), handheld computers, two-way pagers, cellular telephones, text messaging devices, and the like. Many of these handheld electronic devices incorporate wireless communications, although others are stand-alone devices that do not communicate with other devices.

As these handheld electronic devices have become more popular, there has been a growing demand for more functionality and sophistication. While it has been common to provide multiple functions, such as an address book, spell check and text input, the latter especially has become more complex. This is due at least partially to the trend to make these handheld electronic devices smaller and lighter in weight. A limitation in making them smaller has been the physical size of the keyboard if the keys are to be actuated directly by human fingers. Generally, there have been two approaches to solving this problem. One is to adapt the ten digit keypad indigenous to mobile phones for text input. This requires each key to support input of multiple characters. The second approach seeks to shrink the traditional full keyboard, such as the "qwerty" keyboard, by doubling up characters to reduce the number of keys. In both cases, the input generated by actuation of a key representing multiple characters is ambiguous. Various schemes have been devised to interpret inputs from these multi-character keys. Some schemes require actuation of the key a specific number of times to identify the desired character. Others use software to progressively narrow the possible combinations of letters that could be intended by a specified sequence of keystrokes. This approach uses multiple lists that can contain, for instance, prefixes, generic words, learned words, and the like.

Typically, the various applications have had their own database or databases upon which they draw. Thus, the address book application had its own list of addresses used only for that application, the spell check application had its own database of words, and while the text application could have multiple lists or databases, they were only used by that application. This can lead to duplication of data and an inefficient use of memory, which limits the ability to reduce the size, weight and energy use of the handheld electronic device.

### SUMMARY OF THE INVENTION

In accordance with aspects of the invention, multiple applications in a handheld electronic device share databases, thereby reducing the burden on memory. Thus, for example, a text input application can use an address book database as well as its own linguistic databases, and a spell check can use the address book database and all or some of the databases containing the data for the text input application. Generally then, an application can access data from any of the databases containing data usable by it. Some databases may contain data not usable by a particular application in addition to the usable data. Hence, databases that are accessed by multiple applications have an interface that can interpret requests for data from the different applications and return the requested data in the required form. This interface includes a data adapter having an interface module that receives data requests from each application requiring data from the associated database, logic that formulates a query containing the arguments of the data request adapted for the database, and a reader for reading the requested data from the database and providing it to the logic. The logic then generates a response, which may include processing the data received from the database such as by sorting and/or adding frequency of use data. The response is returned to the application by the interface module.

More particularly, a system for managing databases in a handheld electronic device comprises at least two applications implemented in the handheld electronic device each requiring access to data usable by that application. The system further includes a plurality of databases each containing data usable by at least one application and least one database containing data usable by more than one application. An interface provides each application with access to databases containing data usable by that application, so that, the at least one database is interfaced with and provides data to more than one application.

Another aspect of the invention is directed to a method of managing databases in a handheld electronic device comprising implementing at least two applications in the handheld electronic device each requiring data usable by that application, maintaining a plurality of databases each containing data usable by at least one of the applications with at least some of the data in at least one of the databases being usable by more than one application, and interfacing each application with each database containing data usable by that application, so that, the at least one database is interfaced with more than one application.

### BRIEF DESCRIPTION OF THE DRAWINGS

A full understanding of the invention can be gained from the following description of the preferred embodiments when read in conjunction with the accompanying drawings in which:
Figure 1 is a front view of a handheld electronic device incorporating the invention.
Figure 2 is a block diagram illustrating the major components of the handheld electronic device of Figure 1.
Figure 3 is a functional diagram of a data adapter which is one of the components illustrated in Figure 2.

### DESCRIPTION OF THE PREFERRED EMBODIMENTS

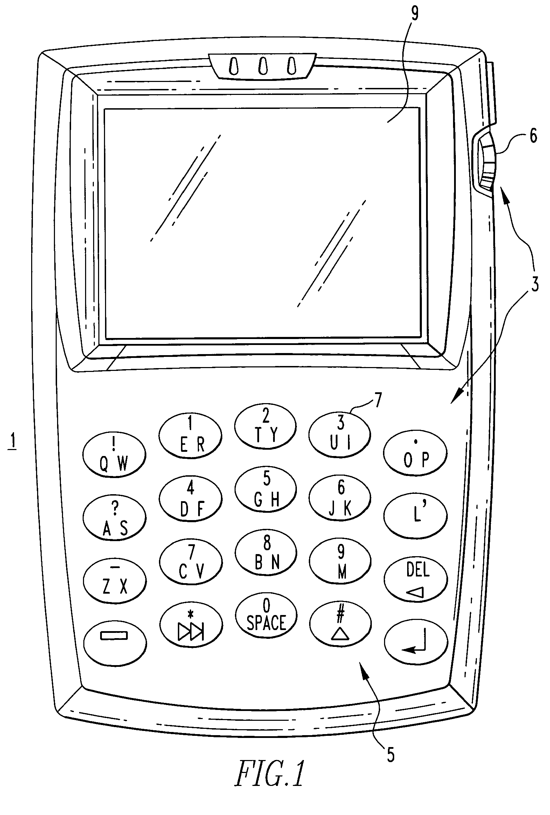

Figure 1 illustrates a wireless handheld electronic device 1, which is but one type of handheld electronic device to which the invention can be applied. The handheld electronic device 1 includes an input device 3 in the form of a keyboard 5 and a thumbwheel 6 that are used to control the functions of a handheld electronic device and to generate text and other inputs. The keyboard 5 constitutes a compressed "qwerty" keyboard in which each of the keys 7 is used to input two or even three letters of the alphabet. Thus, initially the input generated by depressing one of these keys is ambiguous in that it is undetermined as to which letter was intended. As discussed previously, various schemes have been devised for disambiguating the inputs generated by these keys 7 assigned multiple letters for input. The particular scheme used is not relevant to the invention. However, text input applications that use software to progressively narrow the possible combinations of letters that could be intended by a specified sequence of keystrokes use multiple linguistic lists, making it particularly advantageous to adopt aspects of the invention. The inputs provided through the keyboard 5 and thumbwheel 6 are displayed on a display 9 as is well known.

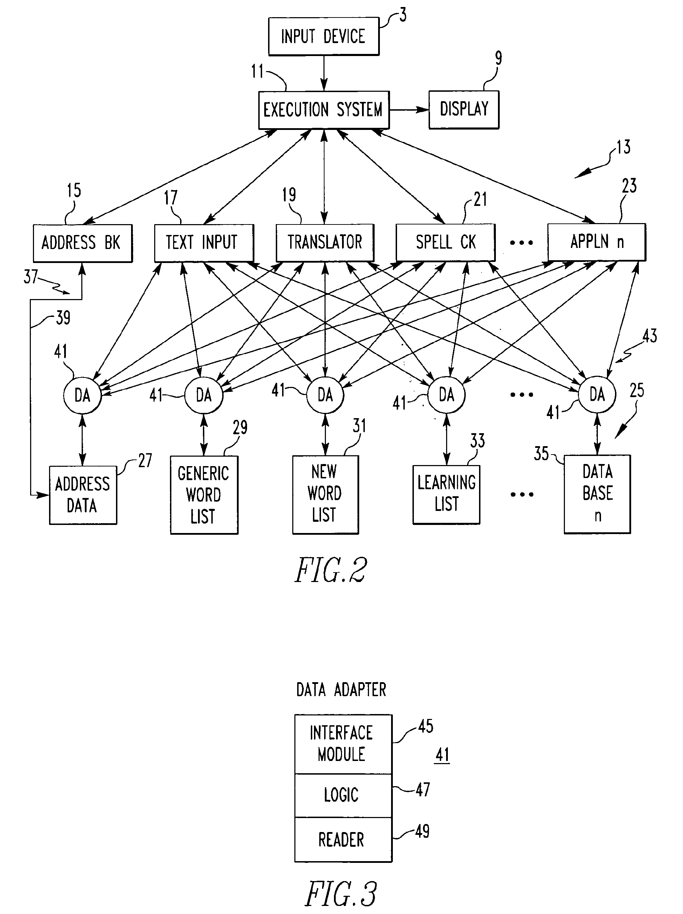

Turning to Figure 2, the input device 3 provides keystroke inputs to an execution system 11 that may be an operating system, a java virtual machine, a run time environment, or the like. The handheld electronic device 1 implements a plurality of applications 13. These applications can include an address book 15, a text input 17, a translation application 19, a spell check application 21 and a number of other applications up to an application n 23.

Each of the applications 13 requires access to data needed for that application to run and produce a meaningful output. Such data is stored in a plurality of databases 25. For example, the address book application 15 requires access to addressee names and mailing addresses and/or e-mail addresses or the like that are stored in the address database 27. The address book application 15 is different from most of the other applications 13 in that it only draws information from the address database 27 as that is the only location for the specific data needed for addressing. Another application that only draws from one database is an auto text application (not shown). An auto text application provides full text for abbreviated inputs such as "best regards" for "BR" and other shortcut inputs. Such an application improves efficiency by allowing the user to expedite input by only providing a cryptic code for a commonly used word or phrase. Thus, other more general databases cannot provide useful information to the auto text application.

Some applications 13 such as the text input application 17 utilize multiple types of linguistic data. The typical disambiguation type of text input application, for instance, utilizes a generic word list stored in a generic word list database 29. Such text input application can also use a new word list stored in a new word list database 31 and a learning list stored in learning list database 33. Additional lists not shown in Figure 2 that can be used by the text input application 17 could include a prefix database and an n gram database. Additional databases 35 primarily associated were the one or more of the additional applications 23 can also be provided.

The text input application in implementing disambiguation displays the variants possible at each stage in the sequence of key inputs, ordered according to frequency of use and with whole words first. Thus, the databases primarily associated with or created for use by the text input application include frequency of use data as part of the linguistic data. This includes, for instances, the generic word list database 29, the new word list database 31 and the learning list database 33.

As an aspect of the invention, databases primarily for one application can be used by other applications. For example, the spell check application, which in the exemplary system has no specific databases created especially for it, can utilize data in other databases. Thus, the spell check application draws from the generic word list database 29, the new word list database 31 and the learning list database 33. However, spell check does not need, and therefore does not use, the frequency of use data in these databases. This exemplifies that some databases contain some information that can be used, and some that cannot be used, by a particular application.

On the other hand, the text input application that utilizes frequency of use data, can draw on a database, such as the address database 27, that does not provide frequency of use data. As will be explained, a frequency of use can be automatically assigned where it is absent. Note that the spell check application 21 can also draw on the data stored in the address database 27. No frequency of use is needed by the spell check application and, hence, there is no need to generate such data as in the case of the text input application.

Each of the applications 13 communicates with the databases 25 that contains data that the application can use through an interface 37. In the case of the address book application 15, which can only utilize data from the address database 27, a direct connection 39 provides this interface. Such a direct connection, wherein the application can form its request for data and process the responses in a fixed format, is well know. Applications, such as the text input application 17, that can draw on data in multiple databases 25 require as the interface 37 a data adapter 41 associated with each such database and a path 43 between the data adapter and the application. In this arrangement, the application formulates a data request that is forwarded over the appropriate path 43 to the data adapters 41 associated with the plurality of databases 25 containing usable data for the request for data. The data adapter 41 obtains the requested data from the associated database and returns it to the application over the appropriate path 43. Hence, the application can receive in response to a single request for data responses from multiple databases. The application then selects from among the responses returned by multiple databases such as by eliminating duplicate responses and sorting the responses. The latter can include sorting the responses in accordance with frequency of use.

Figure 3 illustrates the functional organization of the data adapter 41. An interface module 45 receives the request for data from the application and passes it to logic 47 that formulates a query understandable by a reader 49 containing the arguments in the data request from the application. The reader 49 reads the requested data from the associated database and returns it to the logic, which in turn generates a response that is returned to the requesting application by the interface module 45. In generating the response, selected logic 47 can be applied to the results received from the database. For instance, when the requesting application requires frequency of use data, and the database does not contain this information, the logic can assign a frequency of use. In the exemplary data adapter 41, the logic 47 applies a frequency of use in the upper 25% or so of the range of frequencies of use. Other arrangements can be used to assign a frequency of use where needed. Where frequency of use is assigned or is received as part of the results returned by the reader from the database, additional logic such as sorting according to the frequency of use can be applied in generating the response. The response generated by the logic is then returned to the requesting application by the interface module.

It can be appreciated from the above, that in accordance with aspects of the invention, through sharing of multiple databases by multiple applications the memory resources of a handheld electronic device can be more efficiently employed, thereby making possible a reduction in the size, weight and energy consumption of such devices.

While specific embodiments of the invention have been described in detail, it will be appreciated by those skilled in the art that various modifications and alternatives to those details may be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A system for managing databases in a handheld electronic device comprising:
at least two applications implemented in the handheld electronic device each requiring access to data usable by that application;
a plurality of databases each containing data usable by at least one application and at least one database containing data usable by more than one application; and
an interface providing each application with access to databases containing data usable by that application, so that, the at least one database is interfaced with and provides data to more than one application.

2. The system of Claim 1 wherein the at least one database contains some data usable by and some data not usable by at least one of the applications.

3. The system of Claim 2 wherein the at least two applications comprise a text input application and a spell check application and the at least one database contains words usable by the text input application and the spell check application, and frequency data for the words usable only by the text input application.

4. The system of Claim 2 or Claim 3 wherein the interface comprises a data adapter associated with each database that contains data usable by more than one application.

5. The system of Claim 4 wherein each application using data contained in more than one database comprises means generating a data request that is forwarded to the data adapter associated with each database that contains data usable by the application making the data request.

6. The system of Claim 5 wherein the data adapter comprises an interface module that interprets a data request from an application, and a reader that accesses in the associated database the data needed to respond to the interpretation of the data request.

7. The system of Claim 6 wherein the data adapter further comprises logic that formulates from the data accessed in the associated database a response that is returned to the application making the data request.

8. The system of Claim 7 wherein the associated database contains linguistic data and an associated frequency of use, and the logic formulates the response based on the frequency of use.

9. The system of any preceding claim wherein one of the at least two applications comprises a text input application and the second of the at least two applications comprises an address book application, the at least one database is an address database containing address data and the interface comprises a connection between the address book application and the address database, and an interface adapter between the text input application and the address database.

10. A method of managing databases in a handheld electronic device comprising:
implementing at least two applications in the handheld electronic device each requiring data usable by that application;
maintaining a plurality of databases each containing data usable by at least one of the applications with at least some of the data in at least one of the databases being usable by more than one application; and
interfacing each application with each database containing data usable by that application, so that, the at least one database is interfaced with more than one application.

11. The method of Claim 10 wherein implementing any of the applications comprises generating a data request, and interfacing comprises processing the data request to return to the application making the data request a response from each database containing data usable by the application making the data request.

12. The method of Claim 11 wherein implementing further comprises selecting an output from among responses returned by multiple databases containing data usable by the application making the data request.

13. The method of Claim 12 wherein selecting an output comprises eliminating duplicate responses.

14. The method of Claim 12 or Claim 13 wherein selecting an output comprises sorting responses returned.

15. The method of any of Claims 12 to 14 wherein usable data returned as part of a response comprises frequency of use and selecting an output comprises choosing responses containing the highest frequency of use.

16. The method of any of Claims 11 to 15 wherein interfacing comprises, for each database containing data usable by the application making the data request, processing the data request to formulate a data query for the associated database, reading the associated database for data requested by the data query, and generating the response from the data read from the associated database.

17. The method of Claim 16 wherein generating the response comprises applying selected logic to the data read from the associated database.

18. The method of Claim 17 wherein applying the selected logic comprises sorting the data read from the associated database.

19. The method of Claim 18 wherein the data request includes a request for frequency of use data not contained in the associated database, and wherein applying selected logic comprises assigning a frequency of use to the data read.

20. The method of any of Claims 16 to 19 wherein implementing any of the applications further comprises selecting an output from among responses returned by multiple databases containing data usable by the application making the data request.
